(19) **Europäisches Patentamt**
**European Patent Office**
**Office européen des brevets**

(11) **EP 3 823 871 B1**

(12) **FASCICULE DE BREVET EUROPEEN**

(45) Date de publication et mention de la délivrance du brevet:
**14.02.2024 Bulletin 2024/07**

(21) Numéro de dépôt: **19790623.3**

(22) Date de dépôt: **09.07.2019**

(51) Classification Internationale des Brevets (IPC):
**B60W 10/30** (2006.01) **B60W 10/08** (2006.01)
**B60W 20/11** (2016.01) **B60W 10/26** (2006.01)
**H02P 27/02** (2016.01) **B60W 50/00** (2006.01)

(52) Classification Coopérative des Brevets (CPC):
**B60W 10/30; B60W 10/08; B60W 10/26; B60W 20/11;** B60W 2050/0008; B60W 2050/0013; B60W 2050/0027; B60W 2050/0037; B60W 2510/081; B60W 2710/083; Y02T 10/40; Y02T 10/70; Y02T 10/72

(86) Numéro de dépôt international:
**PCT/FR2019/051694**

(87) Numéro de publication internationale:
**WO 2020/016502 (23.01.2020 Gazette 2020/04)**

(54) **PROCÉDÉ DE PILOTAGE D'UN GROUPE MOTOPROPULSEUR HYBRIDE D'UN VÉHICULE AUTOMOBILE**

VERFAHREN ZUR STEUERUNG EINES HYBRIDANTRIEBSTRANGES EINES KRAFTFAHRZEUGES

METHOD OF CONTROLLING A HYBRID POWERTRAIN OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2018 FR 1856551**

(43) Date de publication de la demande:
**26.05.2021 Bulletin 2021/21**

(73) Titulaires:
• **Renault s.a.s**
**92100 Boulogne Billancourt (FR)**
• **Université d'Orléans**
**45100 Orléans (FR)**

(72) Inventeurs:
• **COLIN, Guillaume**
**45160 Olivet (FR)**
• **HADJ-SAID, Souad**
**45160 Olivet (FR)**
• **KETFI-CHERIF, Ahmed**
**78990 ELANCOURT (FR)**

(74) Mandataire: **Jacobacci Coralis Harle**
**32, rue de l'Arcade**
**75008 Paris (FR)**

(56) Documents cités:
**EP-A1- 2 728 739     CN-B- 104 002 804**

• **HADJ-SAID S ET AL: "Convex Optimization for Energy Management of Parallel Hybrid Electric Vehicles", IFAC - PAPERS ONLINE, vol. 49, no. 11, 2016, pages 271-276, XP002788993, ELSEVIER B.V. NETHERLANDS ISSN: 2405-8963, DOI: 10.1016/j.ifacol.2016.08.041**
• **NGUYEN BAO-HUY ET AL: "An Optimal Control-Based Strategy for Energy Management of Electric Vehicles Using Battery/Supercapacitor", 2017 IEEE VEHICLE POWER AND PROPULSION CONFERENCE (VPPC), IEEE, 11 décembre 2017 (2017-12-11), pages 1-6, XP033344247, DOI: 10.1109/VPPC.2017.8330985**

**Description**

DOMAINE TECHNIQUE AUQUEL SE RAPPORTE L'INVENTION

La présente invention concerne de manière générale les véhicules automobiles équipés de groupes
motopropulseurs hybrides, et notamment ceux équipés
de groupes motopropulseurs comportant plusieurs machines électriques et un moteur à combustion interne.
Elle concerne plus particulièrement un procédé
de pilotage d'un groupe motopropulseur hybride d'un véhicule automobile, ledit groupe motopropulseur comprenant une chaîne de traction thermique et une chaîne de
traction électrique, ladite chaîne de traction électrique
comprenant une batterie de traction, un dispositif de modulation de tension, un onduleur, une première machine
électrique et une deuxième machine électrique, le dispositif de modulation de tension étant adapté à moduler
une tension d'alimentation d'un courant électrique qui est
débité par la batterie de traction et qui est délivré à la
première machine électrique et à la deuxième machine
électrique du véhicule automobile.

ARRIERE-PLAN TECHNOLOGIQUE

Un véhicule automobile hybride comporte une
chaîne de traction thermique conventionnelle (avec un
moteur à combustion interne, un réservoir de carburant,
et une boîte de vitesses) et une chaîne de traction électrique (avec une batterie de traction, un élévateur de tension, un onduleur et une ou plusieurs machines électriques).
Lorsqu'il s'agit d'hybridation parallèle, un tel véhicule automobile est susceptible d'être tracté par sa seule chaîne de traction électrique, ou par sa seule chaîne
de traction thermique, ou encore simultanément par ses
deux chaînes de traction électrique et thermique. On connaît par exemple du document EP2728739 un dispositif
d'entraînement de moteur permettant par exemple de
minimiser les pertes dans l'ensemble de la chaîne de
commande.
On cherche toujours à minimiser la consommation en courant électrique et en carburant des deux chaînes de traction afin de réduire au mieux les rejets de
composants polluants dans l'atmosphère et de garantir
au véhicule la meilleure autonomie possible.
Pour atteindre cet objectif, une solution consiste
à trouver la tension d'alimentation optimale de l'onduleur,
à savoir celle qui minimise les pertes électriques dans la
chaîne de traction électrique.
On connaît pour cela du document US8324856
une méthode consistant à déterminer cette tension d'alimentation optimale au moyen d'une cartographie qui associe, à chaque couple et régime des machines électriques, une valeur de tension.
Cependant, la lecture de cartographie pour déterminer la tension d'alimentation optimale est une étape
longue et complexe à implémenter en conditions réelles
de circulation d'un véhicule automobile. Cette étape est
particulièrement complexe lorsqu'on se trouve en présence de plusieurs machines électriques car la cartographie à élaborer comporte plus de deux dimensions.

OBJET DE L'INVENTION

Afin de remédier aux inconvénients précités de
l'état de la technique, la présente invention propose de
calculer la tension d'alimentation optimale de façon analytique.
Plus particulièrement, on propose selon l'invention un procédé de pilotage d'un groupe motopropulseur
hybride d'un véhicule automobile conforme à la revendication 1.
Ainsi, grâce à l'invention, on utilise un modèle
analytique dans le but de synthétiser une valeur précise
de tension d'alimentation optimale.
L'utilisation d'un tel modèle analytique s'avère
ici intéressante pour deux raisons majeures, à savoir la
fiabilité des résultats qu'il donne et la facilité de son implémentation sur différentes catégories de véhicules
automobiles hybrides.
D'autres avantages de la solution proposée
sont les suivants. Ce procédé nécessite une puissance
de calcul très faible. Il assure une continuité dans la commande du dispositif de modulation de tension (de façon
à éviter toute dégradation de la chaîne de traction électrique et tout à-coup inconfortable pour les passagers du
véhicule). Il permet de profiter de l'ensemble des performances du véhicule automobile dans toute situation de
conduite.
D'autres caractéristiques non limitatives et
avantageuses du procédé de pilotage d'un groupe motopropulseur hybride d'un véhicule automobile conforme
à l'invention sont décrites dans les revendications 2 à 9.

DESCRIPTION DETAILLEE D'UN EXEMPLE DE REALISATION

La description qui va suivre en regard des dessins annexés, donnés à titre d'exemples non limitatifs,
fera bien comprendre en quoi consiste l'invention et comment elle peut être réalisée.
Sur les dessins annexés :

- la figure 1 est une figure schématique des chaînes
  de traction d'un véhicule automobile hybride ; et
- la figure 2 représente sous forme de logigramme un
  procédé conforme à l'invention.

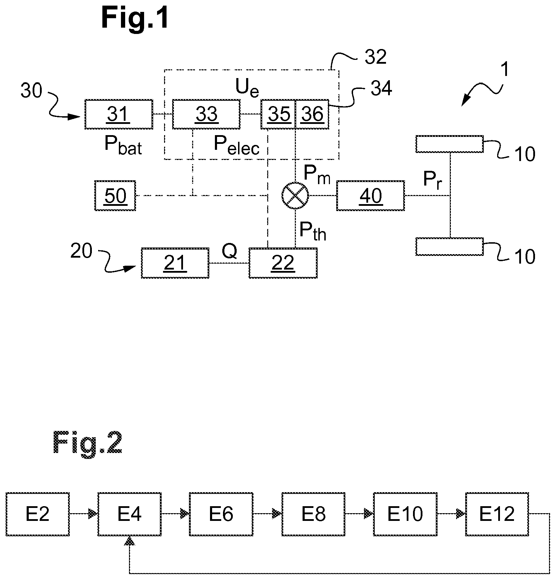

Classiquement, un véhicule automobile comporte un châssis qui supporte notamment un groupe motopropulseur, des éléments de carrosserie et des éléments d'habitacle.
Comme le montre la figure 1, dans un véhicule
automobile 1 de type hybride, le groupe motopropulseur hybride comporte une chaîne de traction thermique 20 et une chaîne de traction électrique 30.

La chaîne de traction thermique 20 comporte notamment un réservoir de carburant 21 et un moteur à combustion interne 22 qui est alimenté en carburant par le réservoir et dont l'arbre de sortie est couplé aux roues motrices 10 du véhicule automobile.

La chaîne de traction électrique 30 comporte quant à elle une batterie de traction 31, un dispositif de modulation de tension 33, un onduleur 35 et deux (ou, en variante, plus de deux) machines électriques : une première machine électrique 36a et une deuxième machine électrique 36b. On considérera ici que la première machine électrique 36a et la deuxième machine électrique 36b ne sont pas identiques.

Le dispositif de modulation de tension 33 est ici un élévateur de tension connecté, en entrée, à la batterie de traction 31, et, en sortie, à l'onduleur 35.

L'onduleur 35 est conçu pour générer un courant alternatif à partir du courant continu reçu du dispositif de modulation de tension 33.

La première machine électrique 36a et la deuxième machine électrique 36b sont ici des moteurs électriques dont les arbres de sortie sont couplés aux roues motrices 10 du véhicule automobile 1.

L'onduleur 35, la première machine électrique 36a et la deuxième machine électrique 36b sont ici combinés en un seul appareil 34.

Le dispositif de modulation de tension 33, l'onduleur 35, la première machine électrique 36a et la deuxième machine électrique 36b sont ici définis comme un « ensemble consommateur de courant 32 ».

Les deux chaînes de traction 20, 30 se rejoignent pour permettre d'entraîner en rotation les roues motrices 10 du véhicule automobile 1, via un dispositif de transmission 40.

Le véhicule automobile 1 comprend par ailleurs une unité électronique de commande (ou ECU pour "Electronic Control Unit"), appelée ici calculateur 50, permettant de commander les deux chaînes de traction précitées (notamment la tension développée par le dispositif de modulation de tension 33 et les puissances développées par la première machine électrique 36a, par la deuxième machine électrique 36b et par le moteur à combustion interne 22).

Le calculateur 50 comprend un processeur et une mémoire qui enregistre des données utilisées dans le cadre du procédé décrit ci-dessous.

Cette mémoire enregistre également une application informatique, constituée de programmes d'ordinateur comprenant des instructions dont l'exécution par le processeur permet la mise en oeuvre par le calculateur 50 du procédé décrit ci-après.

Pour la mise en oeuvre de l'invention, le calculateur 50 est connecté à des capteurs.

Il est notamment connecté à des capteurs adaptés à mesurer les vitesses de rotation, c'est-à-dire les régimes, du moteur à combustion interne 22, de la première machine électrique 36a et la deuxième machine électrique 36b.

Il est également connecté à un capteur permettant de déterminer dans quelle mesure le véhicule doit accélérer ou décélérer. Il peut s'agir d'un capteur mesurant la position de la pédale d'accélération du véhicule, ou d'un capteur mesurant la vitesse du véhicule (dans le cas où le véhicule doit suivre une consigne de vitesse imposée par le conducteur).

Le calculateur 50 est ainsi en mesure de déterminer la valeur d'une donnée relative à une énergie requise par le conducteur du véhicule pour faire avancer ce véhicule avec la dynamique souhaitée. On considérera ici que le calculateur 50 détermine plus précisément la valeur d'une puissance que les roues motrices 10 doivent recevoir, ci-après appelée « puissance aux roues $P_r$ ».

On pourra définir ici d'autres notions permettant de bien comprendre l'invention.

La valeur de la puissance électrique fournie par la batterie de traction 31 au dispositif de modulation de tension 33 sera ici appelée « puissance batterie $P_{bat}$ ».

La valeur de la puissance électrique fournie par le dispositif de modulation de tension 33 à l'onduleur 35 sera ici appelée « puissance électrique d'alimentation $P_{elec}$ ». Elle se décompose en une première puissance électrique d'alimentation $P_{elec1}$ de la première machine électrique 36a et une deuxième puissance électrique d'alimentation $P_{elec2}$ de la deuxième machine électrique 36b selon la formule mathématique : $P_{elec} = P_{elec1} + P_{elec2}$.

La valeur de la tension du courant électrique débité par le dispositif de modulation de tension 33 sera appelée « tension d'alimentation $U_e$ ».

La valeur de la puissance fournie par la première machine électrique 36a aux roues motrices 10 sera ici appelée « première puissance électromécanique $P_{m1}$ ». La valeur de la puissance fournie par la deuxième machine électrique 36b aux roues motrices 10 sera ici appelée « deuxième puissance électromécanique $P_{m2}$ ». La valeur de la puissance totale fournie par les deux machines électriques aux roues motrices 10 est appelée « puissance électromécanique $P_m$ », ce que l'on peut exprimer selon la formule mathématique : $P_m = P_{m1} + P_{m2}$.

La valeur de la puissance fournie par le seul moteur à combustion interne 22 aux roues motrices 10 sera ici appelée « puissance thermomécanique $Pth$ ».

La consommation en carburant du moteur à combustion interne 22 sera appelée « débit de carburant $O$ ».

On appellera « facteur d'équivalence $\lambda$ de la batterie de traction 31 » le « coût énergétique » de l'énergie électrique stockée dans la batterie de traction 31, eu égard au coût de l'énergie thermique. Sa valeur sera choisie en fonction de ce que l'on privilégie plutôt la première machine électrique 36a et la deuxième machine électrique 36b ou le moteur à combustion interne 22 pour propulser le véhicule automobile 1. Ce facteur d'équivalence s'exprime en g/Wh.

L'objet de l'invention consiste à déterminer la contribution que la première machine électrique 36a, la deuxième machine électrique 36b et le moteur à combustion interne 22 doivent chacun apporter pour satisfaire la demande de puissance aux roues $P_r$ requise par le conducteur, tout en garantissant des pertes électriques minimum dans l'ensemble consommateur de courant 32. L'objectif est plus précisément alors de trouver la valeur de tension d'alimentation optimale $U_e^{opt}$ délivrée par le dispositif de modulation de tension 33 à l'onduleur 35 permettant de garantir cette réduction des pertes électriques.

Autrement formulé, l'objet du procédé qui sera ci-après décrit sera de trouver, en fonction de la valeur de la puissance aux roues $P_r$ requise, du régime $\omega_{th}$ du moteur à combustion interne 22, d'un premier régime $\omega_{e1}$ de la première machine électrique 36a et d'un deuxième régime $\omega_{e2}$ de la deuxième machine électrique 36b, le triplet $\{U_e^{opt},\ P_{th}^{opt},\ P_m^{opt}\}$ qui garantit ces pertes électriques minimales (l'exposant « opt » signifiant qu'il s'agit de la valeur optimale).

Pour assurer une bonne compréhension de l'invention, le procédé permettant au calculateur 50 embarqué dans le véhicule automobile 1 d'aboutir au calcul du triplet $\{U_e^{opt},\ P_{th}^{opt},\ P_m^{opt}\}$ sera bien détaillé dans une première partie de l'exposé.

Dans une seconde partie de cet exposé, on pourra détailler le raisonnement qui aura permis d'aboutir à l'invention.

Dans la première partie, on peut donc décrire le procédé qui sera mis en oeuvre par le calculateur 50 lorsque le véhicule automobile 1 sera démarré.

Ce procédé comporte différentes étapes décrites ci-après et représentées sur la figure 2. Ces étapes seront mises en oeuvre de façon récursive, c'est-à-dire en boucle et à pas de temps réguliers.

Comme visible sur la figure 2, le procédé débute par une première étape E2. Lors de cette étape, le calculateur 50 acquiert la puissance demandée aux roues $P_r$, compte tenu par exemple de la position de la pédale d'accélérateur du véhicule automobile.

Il acquiert également le premier régime $\omega_{e1}$ de la première machine électrique 36a, le deuxième régime $\omega_{e2}$ de la deuxième machine électrique 36b et le régime $\omega_{th}$ du moteur à combustion interne 22, au moyen par exemple de capteurs de vitesse angulaire.

Il lit aussi dans sa mémoire la valeur du facteur d'équivalence $\lambda$ de la batterie de traction 31. Cette valeur est prédéterminée (ce qui signifie qu'elle est invariable d'un pas de temps à l'autre).

Le procédé se poursuit à l'étape E4. Dans cette étape, le calculateur 50 calcule un premier couple électrique optimal $T_{e1}^{opt}$ que la première machine électrique 36a doit développer et un deuxième couple électrique optimal $T_{e2}^{opt}$ que la deuxième machine électrique 36b doit développer de façon à répondre aux besoins du conducteur, compte tenu principalement de la puissance demandée aux roues $P_r$ et du facteur d'équivalence $\lambda$ (dont on rappelle qu'il est déterminant pour calculer la contribution de chaque chaîne de traction 20, 30 pour faire avancer le véhicule).

Pour cela, le calculateur 50 détermine tout d'abord la puissance électromécanique optimale $P_m^{opt}$. En particulier, le calculateur 50 détermine cette puissance de façon analytique à partir de la première puissance électrique d'alimentation $P_{elec1}$ de la première machine électrique 36a et de la deuxième puissance électrique d'alimentation $P_{elec2}$ de la deuxième machine électrique 36b, selon une démarche qui sera détaillée ci-après.

Les deux valeurs du premier couple électrique optimal $T_{e1}^{opt}$ et du deuxième couple électrique optimal $T_{e2}^{opt}$ sont ensuite respectivement transmises à la première machine électrique 36a et à la deuxième machine électrique 36b sous forme de consigne à l'étape E6. La réalisation de cette consigne n'étant pas instantanée (les deux machines électriques ayant un temps de réponse de l'ordre de la dizaine de milliseconde), en pratique, à cet instant, la première machine électrique 36a et la deuxième machine électrique 36b développent respectivement un premier couple électrique courant $T_{e1}^{c}$ et un deuxième couple électrique courant $T_{e2}^{c}$.

Au cours de l'étape E8, le calculateur 50 estime ensuite les pertes électriques dans l'ensemble consommateur de courant 32 en tenant compte du premier couple électrique courant $T_{e1}^{c}$ et du deuxième couple électrique courant $T_{e2}^{c}$, ainsi que du premier régime $\omega_{e1}$ de la première machine électrique 36a et du deuxième régime $\omega_{e2}$ de la deuxième machine électrique 36b.

Puis cette valeur des pertes électriques est utilisée par le calculateur 50 à l'étape E10 afin de calculer de manière analytique la tension d'alimentation optimale $U_e^{opt}$ que le dispositif de modulation de tension 33 doit fournir de façon à minimiser ces pertes dans l'ensemble consommateur de courant 32.

Pour cela, le calculateur 50 calcule une tension intermédiaire de la forme $\frac{-K_1}{2.K_2}$, dans laquelle $K_1$ et $K_2$ sont des fonctions prédéterminées. Ces fonctions prédéterminées dépendent du premier régime $\omega_{e1}$ de la première machine électrique 36a, du deuxième régime $\omega_{e2}$ de la deuxième machine électrique 36b, du premier couple électrique $T_{e1}$ développé par la première machine électrique 36a et du deuxième couple électrique $T_{e2}$ développé par la deuxième machine électrique 36b. Elles dépendent en particulier du premier couple électrique courant $T_{e1}^c$ de la première machine électrique 36a et du deuxième couple électrique courant $T_{e2}^c$ de la deuxième machine électrique 36b. En pratique, ces fonctions $K_1$ et $K_2$ sont déterminées en amont à partir de résultats expérimentaux. Les fonctions $K_1$ et $K_2$ sont alors mémorisées dans la mémoire du calculateur 50.

Si cette tension intermédiaire $\frac{-K_1}{2.K_2}$ est comprise entre la tension $U_{bat}$ aux bornes de la batterie de traction 31 et un seuil de tension maximale $U_e^{max}$, la tension d'alimentation optimale $U_e^{opt}$ est considérée égale à cette tension intermédiaire $\frac{-K_1}{2.K_2}$.

Ce seuil de tension $U_e^{max}$ est prédéterminé sur bancs d'essais et est par exemple enregistré dans la mémoire du calculateur 50. Il s'agit en pratique ici de la valeur maximale de tension que peut supporter l'ensemble consommateur de courant 32 (et notamment l'onduleur 35).

En revanche, si la tension intermédiaire $\frac{-K_1}{2.K_2}$ est inférieure à la tension $U_{bat}$ aux bornes de la batterie de traction 31, la tension d'alimentation optimale $U_e^{opt}$ est considérée égale à la tension $U_{bat}$ aux bornes de la batterie de traction 31.

Enfin, si la tension intermédiaire $\frac{-K_1}{2.K_2}$ est supérieure au seuil de tension maximale $U_e^{max}$, la tension d'alimentation optimale $U_e^{opt}$ est considérée égale à ce seuil de tension maximale $U_e^{max}$.

En résumé, la tension d'alimentation optimale est donnée par :

$$
U_e^{opt} = \begin{cases} U_{bat}, \text{ si } \dfrac{-K_1}{2.K_2} < U_{bat} \\[2mm] \dfrac{-K_1}{2.K_2}, \text{ si } U_{bat} < \dfrac{-K_1}{2.K_2} < U_e^{max} \\[2mm] U_e^{max}, \text{ si } U_e^{max} < \dfrac{-K_1}{2.K_2} \end{cases}
$$

La consigne sur la valeur de tension d'alimentation optimale $U_e^{opt}$ est transmise, à l'étape E12, au dispositif de modulation de tension 33. Cependant, cette consigne n'est pas réalisée instantanément, le dispositif de modulation de tension 33 ayant un temps de réponse de l'ordre de la dizaine de milliseconde. En pratique, à cet instant, le dispositif de modulation de tension 33 délivre alors une tension d'alimentation dite courante $U_e^c$.

Cette valeur de tension d'alimentation courante $U_e^c$ est ensuite réutilisée par le calculateur 50 afin d'estimer un nouveau premier couple électrique optimal $T_{e1}^{opt}$ que la première machine électrique 36a et un nouveau deuxième couple électrique optimal $T_{e2}^{opt}$ que la deuxième machine électrique 36b doit développer de façon à répondre aux besoins du conducteur, compte tenu principalement de la puissance demandée aux roues $P_r$, du facteur d'équivalence $\lambda$ et de la tension d'alimentation courante $U_e$ (retour à l'étape E4).

Les étapes sont répétées de manière à faire converger les valeurs courantes de la tension d'alimentation, du premier couple électrique et du deuxième couple électrique vers leurs valeurs optimales permettant alors de minimiser les pertes électriques.

En pratique, à chaque boucle, les valeurs des paramètres sont réévaluées en fonction des valeurs courantes, réajustant alors les différentes valeurs optimales. Le pilotage s'effectue alors de manière à faire converger ces valeurs vers celles minimisant les pertes électriques.

Finalement, le procédé de pilotage conforme à l'invention se termine par une étape de pilotage du dispositif de modulation de tension 33 de manière à ce qu'il délivre la tension d'alimentation optimale $U_e^{opt}$.

Dans une seconde partie de cet exposé, on peut maintenant décrire le raisonnement qui a permis d'aboutir au procédé décrit ci-dessus.

La méthode utilisée se base sur le principe du minimum de Pontriaguine. Ce principe s'applique à un opérateur mathématique particulier, à savoir à un Hamiltonien.

Cet Hamiltonien est ici défini comme une fonction, d'une part, du débit de carburant $Q$, et, d'autre part, du produit de la puissance électrique $P_{bat}$ consommée (fournie par la batterie de traction 31) et du facteur de d'équivalence λ. Il s'exprime sous la forme suivante : $H_{hyb} = Q + \lambda.P_{bat}$.

Selon le principe du minimum de Pontriaguine, cet Hamiltonien doit être minimisé afin de trouver les valeurs optimales recherchées.

Le processus d'optimisation correspondant au procédé décrit précédemment se décompose en deux parties principales.

Une première partie consiste à optimiser la tension d'alimentation $U_e$. En utilisant le Hamiltonien défini ci-dessus, la tension d'alimentation optimale $U_e^{opt}$ est donc solution de l'équation :

$$U_e^{opt} = \arg\min_{Ue} H_{hyb}$$

.

Cette équation s'écrit également, de par la définition du Hamiltonien :

$$U_e^{opt} = \arg\min_{Ue} P_{bat}$$

.

Finalement, la tension d'alimentation optimale $U_e^{opt}$ est obtenue au moyen d'une expression mathématique qui correspond à la résolution d'une équation s'exprimant sous la forme

$$\frac{\partial P_{bat}}{\partial U_e} = 0$$

.

Par définition, la puissance électrique $P_{bat}$ fournie par la batterie de traction 31 se décompose en la puissance électrique d'alimentation $P_{elec}$ et la puissance liées aux pertes électriques $P_S$ : $P_{bat} = P_{elec} + P_S$.

De manière générale, la résolution de l'équation

$$\frac{\partial P_{bat}}{\partial U_e} = 0$$

de manière analytique est complexe. La méthode utilisée ici a consisté à utiliser une approximation pour la puissance électrique $P_{bat}$ fournie par la batterie de traction 31.

Selon cette approximation, une puissance électrique modélisée $P_{bat}^{app}$ est décrite en fonction de la puissance électrique d'alimentation $P_{elec}$ et d'une puissance modélisée liée aux pertes électriques $P_S^{app}$ : $P_{bat}^{app} = P_{elec} + P_S^{app}$

.

En utilisant des résultats expérimentaux, la demanderesse a constaté, qu'en bonne approximation, la puissance modélisée $P_S^{app}$ liée aux pertes électriques de l'élévateur de tension s'exprimait sous la forme d'une fonction linéaire de la tension d'alimentation $U_e$.

Selon ce modèle, cette puissance s'écrit alors :

$$P_S^{app} = \beta_1 U_e + \beta_0$$ où $U_e$ est la tension d'alimentation et $\beta_0$ et $\beta_1$ sont des fonctions prédéterminées dépendant du premier régime $\omega_{e1}$ de la première machine électrique 36a, du deuxième régime $\omega_{e2}$ de la deuxième machine électrique 36b, du premier couple électrique $T_{e1}$ de la première machine électrique 36a et du deuxième couple électrique $T_{e2}$ de la deuxième machine électrique 36b.

Dans le cadre de cette approximation, résoudre l'équation $\frac{\partial P_{bat}}{\partial U_e} = 0$ revient alors à résoudre l'équation $\frac{\partial P_{bat}^{app}}{\partial U_e} = 0$ .

En utilisant des résultats expérimentaux, la demanderesse a également constaté qu'en bonne approximation la puissance électrique modélisée $P_{bat}^{app}$ fournie par la batterie de traction 31 s'exprimait selon une fonction quadratique en la tension d'alimentation $U_e$.

En pratique, elle est donnée par la formule suivante : $P_{bat}^{app} = K_2 U_e^2 + K_1 U_e + K_0$ , où $U_e$ est la tension d'alimentation et $K_0$, $K_1$ et $K_2$ sont des fonctions prédéterminées dépendant du premier régime $\omega_{e1}$ de la première machine électrique 36a, du deuxième régime $\omega_{e2}$ de la deuxième machine électrique 36b, du premier couple électrique $T_{e1}$ développé par la première machine électrique 36a et du deuxième couple électrique $T_{e2}$ développé par la deuxième machine électrique 36b. En pratique, les fonctions $K_0$, $K_1$ et $K_2$ sont issues du meilleur ajustement quadratique des résultats expérimentaux.

Finalement, en utilisant la forme quadratique pour l'expression de la puissance électrique modélisée $P_{bat}^{app}$ fournie par la batterie de traction 31, la solution de l'équation $\frac{\partial P_{bat}^{app}}{\partial U_e} = 0$ s'écrit sous la forme :

$$U_e^* = \frac{-K_1}{2.K_2}$$ , avec $U_e^*$ la tension intermédiaire précédemment introduite et $K_1$ et $K_2$ les fonctions prédéterminées de la puissance électrique modélisée $P_{bat}^{app}$ fournie par la batterie de traction 31.

Cette solution est optimale lorsqu'elle correspond à un minimum pour la puissance électrique modélisée $P_{bat}^{app}$ fournie par la batterie de traction 31. Cela signifie que la puissance électrique modélisée $P_{bat}^{app}$ fournie par la batterie de traction 31 est une fonction convexe par rapport à la tension d'alimentation $U_e$. Cela implique alors que la fonction prédéterminée $K_2$ est positive.

La détermination de la tension d'alimentation optimale $U_e^{opt}$ doit également satisfaire une contrainte de validité. Cette contrainte s'écrit sous la forme :

$$U_{bat} \leq U_e^{opt} \leq U_e^{max}$$ avec $U_{bat}$ la tension aux bornes de la batterie de traction 31 et $U_e^{max}$ le seuil de tension maximale. Finalement, comme décrit précédemment, l'optimisation de la tension d'alimentation se présente selon les différents cas suivants :

$$U_e^{opt} = \begin{cases} U_{bat}, \text{ si } \dfrac{-K_1}{2.K_2} < U_{bat} \\ \dfrac{-K_1}{2.K_2}, \text{si } U_{bat} < \dfrac{-K_1}{2.K_2} < U_e^{max} \\ U_e^{max}, \text{si } U_e^{max} < \dfrac{-K_1}{2.K_2} \end{cases}$$

Une seconde partie du processus d'optimisation consiste à optimiser la répartition des couples électriques entre la première machine électrique 36a et la deuxième machine électrique 36b.

Sachant que les couples électriques $T_{e1}$ et $T_{e2}$ sont liés aux puissances électromécaniques par les équations $P_{m1} = T_{e1} \times \omega_{e1}$ et $P_{m2} = T_{e2} \times \omega_{e2}$, l'optimisation des couples électriques est équivalente à l'optimisation des puissances électromécaniques $P_{m1}$ et $P_{m2}$.

Cette optimisation consiste tout d'abord en une optimisation « locale » entre la première machine électrique 36a et la deuxième machine électrique 36b. Il s'agit ainsi tout d'abord de déterminer la répartition de puissance électrique optimale entre la première machine électrique 36a et la deuxième machine électrique 36b.

Pour cela, il est connu de modéliser, respectivement, la première puissance électrique d'alimentation $P_{elec1}$ de la première machine électrique 36a et une deuxième puissance électrique d'alimentation $P_{elec2}$ de la deuxième machine électrique 36b, selon une fonction quadratique de la première puissance électromécanique $P_{m1}$ et de la deuxième puissance électromécanique $P_{m2}$. En d'autres termes, la première puissance électrique d'alimentation $P_{elec1}$ de la première machine électrique 36a et la deuxième puissance électrique d'alimentation $P_{elec2}$ de la deuxième machine électrique 36b s'expriment selon les formules suivantes :

$$P_{elec1} = a_1 P_{m1}^2 + b_1 P_{m1} + c_1$$ et

$$P_{elec2} = a_2 P_{m2}^2 + b_2 P_{m2} + c_2$$, avec $P_{m1}$ la première puissance électromécanique, $P_{m2}$ la deuxième puissance électromécanique, $a_1$, $b_1$, $c_1$, $a_2$, $b_2$, et $c_2$ des paramètres prédéterminées.

En introduisant ces deux égalités dans la définition de la puissance électrique d'alimentation $P_{elec}$ et en utilisant également la définition de la puissance élec-tromécanique $P_m = P_{m1} + P_{m2}$, il est possible d'exprimer la puissance électrique d'alimentation $P_{elec}$ uniquement en fonction de la puissance électromécanique $P_m$ et de la première puissance électromécanique $P_{m1}$.

L'optimisation de la puissance électrique d'alimentation $P_{elec}$ se traduit alors par la détermination de la première puissance électromécanique optimale $P_{m1}^{opt}$ en fonction la puissance électromécanique $P_m$ par la formule suivante :

$$P_{m1}^{opt} = \arg\min_{P_{m1}} P_{elec}(P_m, P_{m1}),$$

ou encore $\dfrac{\partial P_{elec}}{\partial P_{m1}} = 0$ .

En variante, il est possible d'exprimer la puissance électrique d'alimentation $P_{elec}$ uniquement en fonction de la puissance électromécanique $P_m$ et de la deuxième puissance électromécanique $P_{m2}$. L'optimisa-tion de la puissance électrique d'alimentation $P_{elec}$ peut alors être effectuée par la détermination de la deuxième puissance électromécanique optimale $P_{m2}^{opt}$ .

L'optimisation des couples électriques se poursuit par une optimisation « globale » visant à déterminer la répartition optimale de puissance entre les deux machines électriques 36a, 36b d'une part et le moteur thermique d'autre part.

Comme présenté précédemment, on cherche à minimiser le Hamiltonien, qui dépend entre autres de la puissance électrique modélisée $P_{bat}^{app}$ .

Or, en utilisant la première puissance électro-mécanique $P_{m1}^{opt}$ déterminée, il est possible d'exprimer la puissance électrique modélisée $P_{bat}^{app}$ fournie par la batterie de traction 31 en fonction de la puissance élec-tromécanique $P_m$ selon la formule :

$$P_{bat}^{app} = \alpha_2 P_m^2 + \alpha_1 P_m + \alpha_0$$, avec $\alpha_0$, $\alpha_1$, $\alpha_2$ des paramètres dépendant des paramètres prédéterminés $a_1$, $b_1$, $c_1$, $a_2$, $b_2$, et $c_2$.

La minimisation du Hamiltonien permet de déduire la puissance électromécanique optimale $P_m^{opt}$ de l'équation : $$P_m^{opt} = \arg\min_{P_m} H_{hyb}$$ $H_{hyb}$ qui s'écrit encore $\dfrac{\partial H_{hyb}}{\partial P_m} = 0$ .

Finalement, la connaissance de $P_m^{opt}$ et $P_{m1}^{opt}$ (ou en variante de $P_m^{opt}$ et $P_{m2}^{opt}$) permet de déduire $P_{m2}^{opt}$ (ou en variante $P_{m1}^{opt}$). Les couples électriques optimaux sont alors déduits des équations $P_{m1}^{opt} = T_{e1}^{opt} \times \omega_{e1}$ et $P_{m2}^{opt} = T_{e2}^{opt} \times \omega_{e2}$.

## Revendications

1. Procédé de pilotage d'un groupe motopropulseur hybride d'un véhicule automobile (1), ledit groupe motopropulseur comprenant une chaîne de traction thermique (20) et une chaîne de traction électrique (30), ladite chaîne de traction électrique (30) comprenant une batterie de traction (31), un dispositif de modulation de tension (33), un onduleur (35), une première machine électrique (36a) et une deuxième machine électrique (36b), le dispositif de modulation de tension (33) étant adapté à moduler une tension d'alimentation $(U_e)$ d'un courant électrique qui est débité par la batterie de traction (31) et qui est délivré à la première machine électrique (36a) et à la deuxième machine électrique (36b) du véhicule automobile (1),
**caractérisé en ce que** le procédé comporte :

   - une étape de calcul analytique d'une tension d'alimentation optimale ($U_e^{opt}$) délivrée par le dispositif de modulation de tension (33) à l'onduleur (35) au moyen d'une expression mathématique qui correspond à la résolution d'une équation s'exprimant sous la forme $\frac{\partial P_{bat}}{\partial U_e} = 0$, dans laquelle $U_e$ est la tension d'alimentation, dans laquelle $P_{bat}$ est la puissance électrique fournie par la batterie de traction (31) et dans laquelle ladite puissance électrique $(P_{bat})$ fournie par la batterie de traction (31) s'exprime sous la forme d'une fonction quadratique de ladite tension d'alimentation $(U_e)$, et
   - une étape de pilotage du dispositif de modulation de tension (33) de manière à ce qu'il délivre ladite tension d'alimentation optimale ($U_e^{opt}$).

2. Procédé de pilotage selon la revendication 1, dans lequel l'expression mathématique de ladite tension d'alimentation optimale ($U_e^{opt}$) est donnée par la formule $\frac{-K_1}{2.K_2}$ si ladite tension d'alimentation optimale ($U_e^{opt}$) est comprise entre la tension $(U_{bat})$ aux bornes de la batterie de traction (31) et un seuil de tension maximale ($U_e^{max}$) prédéterminé, dans laquelle $K_1$ et $K_2$ sont des fonctions prédéterminées dépendant d'un premier régime ($\omega_{e1}$) de la première machine électrique (36a), d'un deuxième régime ($\omega_{e2}$) de la deuxième machine électrique (36b), du premier couple électrique ($T_{e1}$) développé par la première machine électrique (36a) et du deuxième couple électrique ($T_{e2}$) développé par la deuxième machine électrique (36b).

3. Procédé de pilotage selon la revendication 2, dans lequel l'expression mathématique de ladite tension d'alimentation optimale ($U_e^{opt}$) est choisie égale à la tension $(U_{bat})$ aux bornes de la batterie de traction (31) si l'expression $\frac{-K_1}{2.K_2}$ est inférieure à ladite tension $(U_{bat})$ aux bornes de la batterie de traction (31).

4. Procédé de pilotage selon la revendication 2 ou 3, dans lequel l'expression mathématique de ladite tension d'alimentation optimale ($U_e^{opt}$) est choisie égale au seuil de tension maximale ($U_e^{max}$) si l'expression $\frac{-K_1}{2.K_2}$ est supérieure audit seuil de tension maximale ($U_e^{max}$).

5. Procédé de pilotage selon l'une quelconque des revendications 1 à 4, dans lequel la puissance $(P_{bat})$ fournie par la batterie de traction (31) s'exprime selon la formule : $P_{bat} = K_2 U_e^2 + K_1 U_e + K_0$, où $U_e$ est la tension d'alimentation et $K_0$, $K_1$ et $K_2$ sont des fonctions prédéterminées dépendant du premier régime ($\omega_{e1}$) de la première machine électrique (36a), du deuxième régime ($\omega_{e2}$) de la deuxième machine électrique (36b), du premier couple électrique ($T_{e1}$) développé par la première machine électrique (36a) et du deuxième couple électrique ($T_{e2}$) développé par la deuxième machine électrique (36b).

6. Procédé de pilotage selon l'une quelconque des revendications 1 à 5, comprenant également, avant l'étape de calcul analytique de la tension d'alimentation optimale ( $U_e^{opt}$ ), une étape de détermination d'un premier couple électrique optimal ( $T_{e1}^{opt}$ ) que la première machine électrique (36a) doit développer et d'un deuxième couple électrique optimal ( $T_{e2}^{opt}$ ) que la deuxième machine électrique (36b) doit développer, le premier couple électrique optimal ( $T_{e1}^{opt}$ ) et le deuxième couple électrique optimal ( $T_{e2}^{opt}$ ) étant fonction d'une valeur d'énergie (P_r) demandée pour propulser le véhicule automobile (1) et d'un facteur d'équivalence (λ) associé à la batterie de traction (31).

7. Procédé de pilotage selon la revendication 6, dans lequel ledit premier couple électrique optimal ( $T_{e1}^{opt}$ ), ledit deuxième couple électrique optimal ( $T_{e2}^{opt}$ ) et ladite tension électrique optimale ( $U_e^{opt}$ ) minimisent les pertes électriques dans un ensemble (32) comprenant au moins le dispositif de modulation de tension (33) si un hamiltonien (H_{hyb}), qui est fonction d'une consommation en carburant d'un moteur à combustion interne (22) du véhicule automobile (1) et d'une consommation en courant électrique dudit ensemble (32), est minimisé.

8. Procédé de pilotage selon l'une quelconque des revendications 1 à 7, comprenant également, avant l'étape de calcul analytique de la tension d'alimentation optimale ( $U_e^{opt}$ ), une étape de détermination de la puissance électrique (P_{bat}) fournie par la batterie de traction (31).

9. Procédé de pilotage selon l'une quelconque des revendications 1 à 8, dans lequel les pertes électriques (P_S) dans le dispositif de modulation de tension (33) s'expriment sous la forme d'une fonction linéaire de ladite tension d'alimentation (U_e).

**Patentansprüche**

1. Verfahren zur Steuerung eines Hybridantriebsstrangs eines Kraftfahrzeuges (1), wobei der Antriebsstrang eine thermische Antriebskette (20) und eine elektrische Antriebskette (30) umfasst, wobei die elektrische Antriebskette (30) eine Antriebsbatterie (31), eine Vorrichtung zur Spannungsmodulation (33), einen Wechselrichter (35), eine erste elektrische Maschine (36a) und eine zweite elektrische Maschine (36b) umfasst, wobei die Vorrichtung zur Spannungsmodulation (33) ausgeführt ist, um eine Versorgungsspannung (U_e) eines elektrischen Stroms, der von der Antriebsbatterie (31) abgezogen wird, und der an die erste elektrische Maschine (36a) und an die zweite elektrische Maschine (36b) des Kraftfahrzeuges (1) abgegeben wird, zu modulieren, **dadurch gekennzeichnet, dass** das Verfahren beinhaltet:

- einen Schritt eines analytischen Berechnens einer optimalen Versorgungsspannung ( $U_e^{opt}$ ), die von der Vorrichtung zur Spannungsmodulation (33) an den Wechselrichter (35) abgegeben wird, anhand eines mathematischen Ausdrucks, welcher der Lösung einer Gleichung entspricht, die in der Form von $\frac{\vartheta P_{bat}}{\vartheta U_e} = 0$ ausgedrückt wird, wobei $U_e$ die Versorgungsspannung ist, wobei $P_{bat}$ die von der Antriebsbatterie (31) bereitgestellte elektrische Leistung ist, und wobei die von der Antriebsbatterie (31) bereitgestellte elektrische Leistung ($P_{bat}$) in der Form einer quadratischen Funktion der Versorgungsspannung ($U_e$) ausgedrückt wird, und
- einen Schritt des Steuerns der Vorrichtung zur Spannungsmodulation (33), sodass sie die optimale Versorgungsspannung ( $U_e^{opt}$ ) abgibt.

2. Verfahren zur Steuerung nach Anspruch 1, wobei der mathematische Ausdruck der optimalen Versorgungsspannung ( $U_e^{opt}$ ) durch die Formel $\frac{-k_1}{2.k_2}$ gegeben ist, wenn die optimale Versorgungsspannung ( $U_e^{opt}$ ) zwischen der Spannung ($U_{bat}$) an den Klemmen der Antriebsbatterie (31) und einer vorbestimmten maximalen Spannungsschwelle ( $U_e^{max}$ ) liegt, wobei $K_1$ und K_2 vorbestimmte Funktionen sind, die von einer ersten Drehzahl ( $\overline{\omega}_{e1}$ ) der ersten elektrischen Maschine (36a), einer zweiten Drehzahl ($\overline{\omega}_{e2}$) der zweiten elektrischen Maschine (36b), dem ersten elektrischen Moment (T_{e1}), das von der ersten elektrischen Maschine (36a) entwickelt wird, und dem zweiten elektrischen Moment (T_{e2}), das von der zweiten elektrischen Maschine (36b) entwickelt wird, abhängig ist.

3. Verfahren zur Steuerung nach Anspruch 2, wobei der mathematische Ausdruck der optimalen Versorgungsspannung ( $U_e^{opt}$ ) gleich der Spannung ( $U_{bat}$) an den Klemmen der Antriebsbatterie (31) ausgewählt wird, wenn der Ausdruck $\frac{-k_1}{2.k_2}$ kleiner als die Spannung ( $U_{bat}$) an den Klemmen der Antriebsbatterie (31) ist.

4. Verfahren zur Steuerung nach Anspruch 2 oder 3, wobei der mathemaische Ausdruck der optimalen Versorgungsspannung ( $U_e^{opt}$ ) gleich der maximalen Spannungsschwelle ( $U_e^{max}$ ) ausgewählt wird, wenn der Ausdruck $\frac{-k_1}{2.k_2}$ größer als die maximale Spannungsschwelle ( $U_e^{max}$ ) ist. 2. k,

5. Verfahren zur Steuerung nach einem der Ansprüche 1 bis 4, wobei die von der Antriebsbatterie (31) bereitgestellte elektrische Leistung ( $P_{bat}$) gemäß der folgenden Formel ausgedrückt wird:

$$P_{bat} = K_2 U_e^2 + K_l U_e + K_0,$$ wobei $U_e$ die Versorgungsspannung ist, und $K_0$, $K_1$ und $K_2$ vorbestimmte Funktionen sind, die von der ersten Drehzahl ( $\overline{\omega}_{e1}$) der ersten elektrischen Maschine (36a), der zweiten Drehzahl ( $\overline{\omega}_{e2}$) der zweiten elektrischen Maschine (36b), dem ersten elektrischen Moment ( $T_{e1}$), das von der ersten elektrischen Maschine (36a) entwickelt wird, und dem zweiten elektrischen Moment ( $T_{e2}$), das von der zweiten elektrischen Maschine (36b) entwickelt wird, abhängig ist.

6. Verfahren zur Steuerung nach einem der Ansprüche 1 bis 5, das vor dem Schritt des analytischen Berechnens der optimalen Versorgungsspannung ( $U_e^{opt}$ ) auch einen Schritt zum Bestimmen eines optimalen ersten elektrischen Moments ( $T_{e1}^{opt}$ ), welches die erste elektrische Maschine (36a) zu entwickeln hat, und eines optimalen zweiten elektrischen Moments ( $T_{e2}^{opt}$ ), das die zweite elektrische Maschine (36b) zu entwickeln hat, umfasst, wobei das optimale erste elektrische Moment ( $T_{e1}^{opt}$ ) und das optimale zweite elektrische Moment ( $T_{e2}^{opt}$ ) von einem angeforderten Energiewert ( $P_r$) zum An-

treiben des Kraftfahrzeuges (1) und von einem der Antriebsbatterie (31) zugeordneten Äquivalenzfaktor ( $\lambda$) abhängig sind.

7. Verfahren zur Steuerung nach Anspruch 6, wobei das optimale erste elektrische Moment ( $T_{e1}^{opt}$ ), das optimale zweite elektrische Moment ( $T_{e2}^{opt}$ ) und die optimale elektrische Spannung ( $U_e^{opt}$ ) die elektrischen Verluste in einer Einheit (32), welche mindestens die Vorrichtung zur Spannungsmodulation (33) umfasst, minimieren, wenn eine Hamiltonfunktion ( $H_{hyb}$), die von einem Kraftstoffverbrauch eines Innenverbrennungsmotors (22) des Kraftfahrzeuges (1) und einem Verbrauch an elektrischem Strom der Einheit (32) abhängig ist, minimiert ist.

8. Verfahren zur Steuerung nach einem der Ansprüche 1 bis 7, das vor dem Schritt des analytischen Berechnens der optimalen Versorgungsspannung ( $U_e^{opt}$ ) auch einen Schritt zum Bestimmen der von der Antriebsbatterie (31) bereitgestellten elektrischen Leistung ( $P_{bat}$) umfasst.

9. Verfahren zur Steuerung nach einem der Ansprüche 1 bis 8, wobei die elektrischen Verluste (Ps) in der Vorrichtung zur Spannungsmodulation (33) in der Form einer linearen Funktion der Versorgungsspannung ( $U_e$) ausgedrückt werden.

**Claims**

1. A method for controlling a hybrid powertrain of a motor vehicle (1), said powertrain comprising a thermal traction chain (20) and an electric traction chain (30), said electric traction chain (30) comprising a traction battery (31), a voltage modulation device (33), an inverter (35), a first electric machine (36a) and a second electric machine (36b), the voltage modulation device (33) being adapted to modulate a supply voltage ( $U_e$) of an electric current which is output by the traction battery (31) and which is delivered to the first electric machine (36a) and to the second electric machine (36b) of the motor vehicle (1), **characterised in that** the method comprises:

- a step of analytically calculating an optimal supply voltage ( $U_e^{opt}$ ) delivered by the voltage modulation device (33) to the inverter (35) by means of a mathematical expression which corresponds to the resolution of an equation expressed in the form $\partial P_{bat}/\partial Ue = 0$, wherein ( $U_e$)

is the supply voltage, wherein $P_{bat}$ is the electrical power supplied by the traction battery (31) and wherein said electrical power $(P_{bat})$ supplied by the traction battery (31) is expressed in the form of a quadratic function of said supply voltage ($U_e$), and
- a step of controlling the voltage modulation device (33) so that it delivers said optimal supply voltage ( $U_e^{opt}$ ).

2. The control method according to claim 1, wherein the mathematical expression of said optimal supply voltage ( $U_e^{opt}$ ) is given by the formula $-K_1 / 2 \cdot K_2$ if said optimal supply voltage ( $U_e^{opt}$ ) is comprised between the voltage ($U_{bat}$) at the terminals of the traction battery (31) and a predetermined maximum voltage threshold ($U_e^{max}$), wherein $K_1$ and $K_2$ are predetermined functions depending on a first speed ($\omega_{e1}$) of the first electric machine (36a), a second speed ($\omega_{e2}$) of the second electric machine (36b), the first electric torque ($T_{e1}$) developed by the first electric machine (36a) and the second electric torque ($T_{e2}$) developed by the second electric machine (36b).

3. The control method according to claim 2, wherein the mathematical expression of said optimal supply voltage ( $U_e^{opt}$ ) is chosen equal to the voltage ($U_{bat}$) at the terminals of the traction battery (31) if the expression $-K_1 / 2 \cdot K_2$ is lower than said voltage ($U_{bat}$) at the terminals of the traction battery (31).

4. The control method according to claim 2 or 3, wherein the mathematical expression of said optimal supply voltage ( $U_e^{opt}$ ) is chosen equal to the maximum voltage threshold ($U_e^{max}$) if the expression $-K_1 / 2 \cdot K_2$ is greater than said maximum voltage threshold ($U_e^{max}$).

5. The control method according to any one of claims 1 to 4, wherein the power ($P_{bat}$) supplied by the traction battery (31) is expressed according to the formula: $P_{bat} = K_2 U_e^2 + K_1 U_e + K_0$, where $U_e$ is the supply voltage and $K_0$, $K_1$ and $K_2$ are predetermined functions depending on the first speed ($\omega_{e1}$) of the first electrical machine (36a), the second speed ($\omega_{e2}$) of the second electrical machine (36b), of the first electrical torque ($T_{e1}$) developed by the first electrical machine (36a) and of the second electrical torque ($T_{e2}$) developed by the second electrical machine (36b).

6. The control method according to any one of claims 1 to 5, also comprising, before the step of analytically calculating the optimal supply voltage ( $U_e^{opt}$ ), a step of determining a first optimal electrical torque ($T_{e1}^{opt}$) that the first electrical machine (36a) must develop and a second optimal electrical torque ($T_{e2}^{opt}$) that the second electrical machine (36b) must develop, the first optimal electrical torque ($T_{e1}^{opt}$) and the second optimal electrical torque ($T_{e2}^{opt}$) being a function of an energy value ($P_r$) required to propel the motor vehicle (1) and an equivalence factor ($\lambda$) associated with the traction battery (31).

7. The control method according to claim 6, wherein said first optimal electrical torque ($T_{e1}^{opt}$), said second optimal electrical torque ($T_{e2}^{opt}$) and said optimal electrical voltage ( $U_e^{opt}$ ) minimise the electrical losses in an assembly (32) comprising at least the voltage modulation device (33) if a Hamiltonian ($H_{hyb}$), which is a function of a fuel consumption of an internal combustion engine (22) of the motor vehicle (1) and an electric current consumption of said assembly (32), is minimised.

8. The control method according to any one of claims 1 to 7, also comprising, before the step of analytically calculating the optimal supply voltage ( $U_e^{opt}$ ), a step of determining the electrical power ($P_{bat}$) supplied by the traction battery (31).

9. The control method according to any one of claims 1 to 8, wherein the electrical losses ($P_s$) in the voltage modulation device (33) are expressed in the form of a linear function of said supply voltage ($U_e$).

# Fig.1

# Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2728739 A
- US 8324856 B